# EUROPEAN PATENT SPECIFICATION

(11) **EP 3 035 721 B1**
(45) Date of publication and mention of the grant of the patent: **19.09.2018**
(21) Application number: 14307035.7
(22) Date of filing: 15.12.2014
(51) Int. Cl.: H04W 8/18, H04L 29/08, H04W 4/00, H04W 8/00

(54) **Resource sharing between devices in a wireless network**
Gemeinsame Nutzung von Ressourcen zwischen Vorrichtungen in einem drahtlosen Netz
Partage de ressources entre des dispositifs dans un réseau sans fil

(43) Date of publication of application: 22.06.2016
(73) Proprietor: Alcatel Lucent, 91620 Nozay (FR)
(72) Inventor: Mathur, Akhil, DUBLIN, 15 (IE)
(74) Representative: Sarup, David Alexander

(56) References cited:
- US-A1- 2008 192 666
- US-A1- 2012 131 364
- US-A1- 2014 044 007

## Description

### FIELD OF THE INVENTION

The invention relates to the field of wireless communication, and in particular to the sharing of resources between devices within a wireless communication network.

### BACKGROUND

It is increasingly common for people to own multiple communication devices such as mobile phones, tablets and laptops. Each device has its own resources, such as its own battery, processor, display, 3G data etc. For example, at a given moment in time, a person's mobile phone may have {battery: 70%, available 3G data: 500MB} while their tablet may have {battery: 3%, available 3G data: 1GB}. There is currently no easy way for a person to utilise one device's plentiful resource to compensate for a low corresponding resource on another device.

For example, if one of the devices is low on a battery resource (e.g. the tablet has only 3% battery remaining), and it receives a request to download a video file, currently it would have to do it over its 3G connection which will further drain the battery. Even if there is a phone nearby which has 80% battery level, the tablet will not be aware of this capacity and certainly cannot automatically make use of the battery power available on the phone to download the video. In this regard, the only current way to do this would be for the user to manually switch the context from tablet to the mobile phone (i.e. go to the mobile phone and start the download there).

This problem may also manifest itself in terms of other resources such as data download quota. If a mobile phone has only 10MB of data download available in its subscriber quota, while a nearby tablet has 2GB of data download available, there is no seamless way that the mobile device can utilise the tablet's available data to download a file. To do so, currently a user will have to manually share the tablet's internet connection with the mobile device, or subscribe to some sort of shared data plan with the operator beforehand. Again, there is no seamless, temporal solution to enable such data sharing.

The sharing of resources between devices to alleviate local resource shortages on some devices would be desirable.

US2012/0131364 discloses a method for managing the charge level of a battery of a mobile terminal connected to a network. It discusses the idea of preserving battery power when its battery is low by connecting to the network via a second terminal that acts as a relay. Control equipment receives signals indicative of battery levels of different terminals and for those terminals that it identifies as having a battery charge level lower than a predefined threshold it transmits a list of terminals to which the terminal could connect and which have a higher battery charge level.
US2014/0044007 discloses a system where communications to a network from a user equipment can be relayed via another device to conserve power or data credit at the use equipment. The use of a relaying device is triggered by signals falling below threshold values.

### SUMMARY

The invention is set out in the appended set of claims. The embodiments and/or examples of the following description which are not covered by the appended claims are considered as not being part of the present invention. A first aspect of the present invention provides a method performed at a network node, said method comprising facilitating sharing of resources between multiple user equipment located within a radio coverage area of said network node by: storing within a resource database a current resource capacity of each of at least a subset of said multiple user equipment; and in response to receiving a signal from one of said multiple user equipment indicating a resource requirement to complete a data communication task requested at said user equipment; determining from said resource database whether one of said at least a subset of multiple user equipment has sufficient resource available to complete said requested data communication task; and if so transmitting an indicator identifying said user equipment with said resource available.

The inventor of the present invention recognised that where a particular user equipment may be short of a resource to perform a particular requested task, that is the current amount of resource may be insufficient or may be barely sufficient such that performing said task would leave said user equipment with insufficient resource to perform further similar tasks, it is increasingly likely that there may be other local devices, perhaps owned by the same user, that do have sufficient resource to perform the task. Thus, some way of enabling or facilitating resource sharing to enable devices short on resource to collaborate with others to allow a task to be successfully performed would be advantageous. The inventor of the present invention recognised that where these devices are all within the radio coverage area of a network node, the network node will communicate with each of them and as such a database of their current resource levels could be stored at this network node and where resources are scarce on one device, another device that has sufficient available resource could be identified from the database.

The step of determining that one of the multiple user equipment is low on resource comprises receiving a signal from that user equipment which indicates a resource requirement. In this regard, the signal may indicate the task that the user equipment has been asked to perform that it does not have sufficient resource to perform or it may simply indicate the resource required to perform or complete the task. The latter may be preferable as less information is transmitted and the network node does not have to process it to determine the amount of resource required.

The method comprises a further step of transmitting an indicator identifying said user equipment with said resource available and in some embodiments indicating that a data communication task is to be transferred.

Once the network node has identified a user equipment with available resource, then it may transmit an indicator identifying this user equipment along with an indication that a data communication task is to be transferred. This enables user equipment receiving this signal to understand that the identified user equipment is identified with regard to resource being available.

In some cases, an indicator identifying the user equipment requesting the resource may also be transmitted along with an indication that a communication task is to be transferred between these two devices. In this way, the user equipment with the resource available and the user equipment that requested the resource, will both be informed of the identity of the user equipment that they are to share resources with. However, it is not required for both user equipment to be identified as the user equipment requesting resource will be aware that it has requested resource and on receipt of an indicator identifying user equipment with resource, it can then autonomously contact that user equipment.

In some embodiments, the method comprises a further step of receiving a confirmation signal indicating that said data communication task has been accepted by said user equipment with said resource available, and in response to said signal marking said user equipment with said resource available as currently unavailable in said database.

If the user equipment with the available resource agrees to perform the data communication task, then this use equipment can be marked as unavailable in the database while it performs this task, thereby avoiding it being selected to process other tasks during this period. Thus, the network node may respond to receipt of the confirmation signal indicating the data communication task has been accepted by marking the user equipment as currently unavailable. In this regard, the confirmation signal could be sent either by the user equipment with the available resource or by the user equipment that is low on resource and has received a signal from the user equipment with the available resource indicating that it has accepted the task, depending on the configuration.

In some embodiments, the method comprises a further step of receiving a signal indicating that said data communication task has not been accepted by said user equipment with said resource available, and in response to said signal determining from said resource database whether a further one of said subset of multiple user equipment has sufficient resource available to complete said requested data communication.

It may be that in some cases the user equipment that has been identified as having available resource does not accept the task. This may be because the two user equipment are not located close enough to each other to form a direct link via which they can transmit the data, or it may be because the user equipment that was identified as having resource is currently busy performing some other task. In any case, where this occurs, a signal indicating this will be transmitted from one of the user equipment and in response to this the network node will access the resource database and determine whether there is a further user equipment with sufficient resource to complete the requested data communication. Where such a user equipment is identified then the network node may then transmit an indicator identifying that user equipment.

In some embodiments, the method comprises receiving periodic signals from said subset of multiple user equipment indicating current resource capacity and updating said resource database in response to said signals.

The resource database may be periodically updated by the network node in response to signals received from user equipment indicating their current resource capacity. In this way, a current resource database is maintained which can be used to determine available resources for performing particular tasks.

In some embodiments, the method comprises receiving a request from a user equipment to register with said network node and in response to said request determining whether said user equipment is one of said subset of user equipment available to share resources with each other and if so adding said user equipment to said database.

As noted previously, although the radio coverage area of the network node may support a multiple number of user equipment, in some cases only a subset of these user equipment are available to share resources. In this regard, when registering with the network node, a user equipment can be identified as being part of that subset or not. In this regard, there may be many different reasons why a user equipment may or may not wish to share its resources with others and this can be determined on connecting to the network node.

In some embodiments, said step of determining whether said user equipment is one of said subset of user equipment comprises at least one of: requesting and receiving a password from said user equipment; requesting confirmation from said user equipment that said user equipment is willing to share resources; comparing identification information transmitted by said user equipment with a database of identification data identifying user equipment registered as being within said subset.

The subset of user equipment may be user equipment that are trusted by each other, they may be user equipment owned by a same user or some other subset of user equipment. This subset can be determined in a number of ways such as the network node requesting a password on the device registering with the network node and on receiving the password, recognising that the device is one that is supported by this network node and as such a device that is trusted for the sharing of resources. In other embodiments, the confirmation may be requested from the user equipment as to whether it wishes to participate in the sharing of resources and only when the user equipment has confirmed that it does, will the user equipment be added to the database. In still other embodiments, there may be a database identifying user equipment within the subset and on registering, the identity of the user equipment can be compared with user equipment in that database and if it is one of the user equipment so identified, it can be added to the resource database. Where, for example, user equipment have previously registered with a network node, then the network node may have stored their identity as being user equipment that should be treated as within the subset that share resources and in which case they will be added to the resource database on connection.

It should be noted that where the user equipment periodically transmits updates of its resource capacity, where no update has been received for a predetermined period then the network node may delete that user equipment from the resource database or mark it as currently unavailable.

A second aspect of the present invention provides a network node providing radio coverage for multiple user equipment located within a radio coverage area of said network node, said network node comprising: a data store configured to store a resource database comprising a current resource capacity of each of at least a subset of said multiple user equipment; analysing circuitry configured to analyse said database and configured to respond to receipt of a signal from one of said multiple user equipment indicating a resource requirement to complete a data communication task requested at said user equipment to determine from said resource database whether one of said at least a subset of multiple user equipment has sufficient resource available to complete said requested data communication task; and communication circuitry for transmitting an indicator identifying said user equipment with said resource available.

A third aspect of the present invention provides a method performed at a user equipment, comprising: periodically transmitting signals indicating capacity of at least one local resource of said user equipment; in response to a data communication request, determining whether said user equipment is low on a resource required to complete said data communication task and if so transmitting a signal indicating a resource requirement; receiving a signal identifying a user equipment able to provide said resource requirement; and performing steps to establish a direct communication link with said user equipment.

In order for the network node to be able to determine whether there are resources available that can be shared between devices, it needs to know the current capacity of user equipment. Thus, the user equipment may periodically transmit signals indicating the current capacity, that is the current amount or level of at least one local resource of the user equipment. In this regard, a local resource is one that is specific to the user equipment and is not generally shared between devices. It may include such things as current battery capacity or level, available data download capacity or another resource such as whether or not connection to a 3G network is currently available.

The method comprises a further step of in response to a data communication request, determining whether said user equipment is low on a resource to complete said data communication task and if so transmitting a signal indicating a resource requirement.

The user equipment may determine when a resource is low, such that perhaps it does not have sufficient or perhaps has barely sufficient resource to complete a data communication task and it may then transmit a signal indicating this resource requirement to the network node. In some embodiments, the signal may indicate the amount of resource required to perform the task.

Following transmission of this signal, the user equipment may in some embodiments perform a further step of reducing use of said scarce resources. In this regard, having determined some of its resources are low or not sufficient to perform a task, it may having requested that someone else performs the task, conserve the scarce resources by limiting their use. Thus, where for example the user equipment was short of battery resource and it had a pending task to download data, then it may having requested the task be performed by another device, turn off the mobile data interface.

The method comprises receiving a signal identifying a user equipment able to provide said resource requirement and performing steps to establish a direct communication link with said user equipment.

The user equipment on receiving a signal identifying the user equipment that is able to provide the required resource may then perform steps to establish a direct communication link with this user equipment. In this regard, where the user equipment with available resource is performing data communication for this user equipment, then the data needs to be transferred between the user equipment and establishing a direct communication is a convenient and low energy way of transferring data that does not use up either the network data resource of the user equipment or a large amount of its battery resource.

In some embodiments, the method comprises receiving a request to provide resource for a data communication task for another user equipment, and performing steps to establish a direct communication link with said other user equipment.

In addition to being able to request resource from other user equipment, the user equipment may itself receive requests for resource from user equipment, where other user equipment are short on resources. In this case, a direct communication link with this other user equipment should also be established such that the data relating to the data communication performed by the other device can be transferred between the devices. In this regard the direct communication link can be initiated either by the user equipment receiving the resource request or by the user equipment transmitting it depending on the configuration.

In some embodiments, the method comprises in response to said steps of establishing said direct communication link being unsuccessful transmitting a signal indicating that said data communication task has not been accepted by said user equipment with said resource.

It may be that one cannot establish a direct link between the user equipment. In this regard, they may be located too far apart to allow such a link to be established and in this case, performing the requested task on the other user equipment maybe not be helpful. Thus, if having tried to establish a direct communication link, the user equipment determines that this direct communication link cannot be established then a signal indicating that the data communication task has not been accepted by said user equipment with said resource is transmitted to the network node. In this regard, either of the user equipment may transmit this signal; the important thing is that the network node is aware that the sharing of resources between these two user equipment is not appropriate and it needs to find an alternative user equipment with available resource to perform this task.

In some embodiments, the method comprises receiving a request to perform a data communication task for another user equipment and in response to said request transmitting a confirmation signal and performing said data communication task.

The user equipment may perform a request to perform a data communication task for another user equipment. This request may be transmitted as an indication that such a task should be performed by the network node or it may transmitted via the direct communication link with details of the task that needs to be performed. In response to receiving the request to perform the data communication task, the user equipment will transmit a confirmation signal indicating that it will perform this task and it will then perform the data communication task.

Following performing that task, in some embodiments the user equipment exchange data with each other by the direct communication link that has been established.

A fourth aspect of the present invention provides a user equipment comprising: assessing circuitry configured to periodically assess a current capacity of at least one local resource of said user equipment; a transmitter configured to periodically transmit said capacity; determining circuitry configured to respond to a data communication request to determine whether said user equipment has sufficient resource to complete said data communication task and if not to control said transmitter to transmit a signal indicating a resource requirement; a receiver configured to receive a signal identifying a user equipment able to provide said resource requirement; and communication circuitry configured to establish a direct communication link with said identified user equipment.

The user equipment further comprises determining circuitry configured to respond to a data communication request, to determine whether said user equipment has sufficient resource to complete said data communication task and if not to control said transmitter to transmit a signal indicating a resource requirement.

A fifth aspect of the present invention provides a computer program which when executed by a computer is operable to control said computer to perform steps in a method according to a first aspect of the present invention or a second aspect to the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically shows a network node and user equipment according to an embodiment;
Figure 2 schematically shows steps performed by the devices;
Figure 3 shows a flow diagram illustrating steps in a method performed at a network node according to an embodiment;
Figure 4 shows a flow diagram illustrating steps in a method performed at a user equipment requesting resource; and
Figure 5 shows a flow diagram illustrating steps in a method performed at a user equipment receiving a request for resource.

### DESCRIPTION OF THE EMBODIMENTS

Before discussing the embodiments in any more detail, first an overview will be provided.

Existing techniques for dealing with a shortage of resources on a device include preserving battery life on a device using techniques such as reducing screen brightness, turning off communication methods (e.g. Wi-Fi) after a period of inactivity; and putting the device into sleep mode. These are all restrictive approaches, in that they will preserve the battery for a longer time at the cost of a restricted user experience. Furthermore, they don't really solve the key problem: i.e. if my phone battery is at 2% and I still want to download a file from the internet, I will be forced to enable 3G/4G on my phone which will further drain the battery.

On data plan sharing: Mobile operators do offer shared data plans for users, under which the consumers get a common data quota shared by all their devices. This means that users do not have to worry about data consumption per device. However, this is a different solution that is controlled by the data plan provider. Furthermore, the devices within the plan need to be selected in advance and there may be situations where the shared data plan is running low and in such a situation there will be no resource available.

As we will describe later, embodiments address these resource problems by sharing resources between nearby trusted devices. This can lead to lower battery drain and/or reduced data usage on a device with scarce resources.

In order to do this in some embodiments a real-time exchange centre is created at the home gateway, which facilitates the sharing of data communication resources.

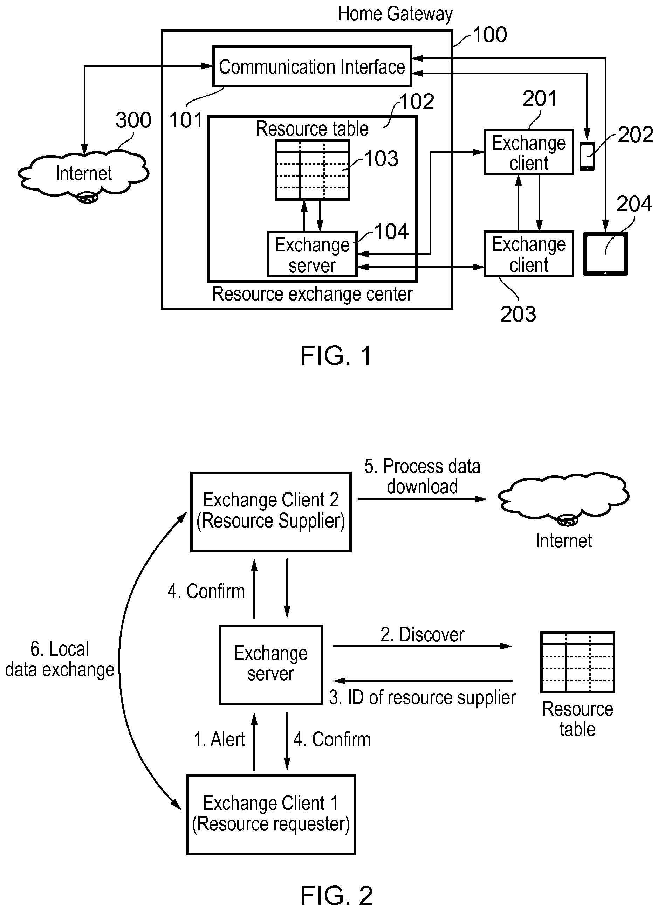

As shown in Figure 1, a home gateway (100) which may be a Wi-Fi Access point or a LTE small cell installed inside a home has a communication interface (101) to the external internet (300), through which client devices (202, 204) inside the home connect to the Internet.

A resource exchange centre (102) is provided at the home gateway (100). The resource exchange centre (REC) is in this embodiment a software module that runs on the home gateway and consists of two components: i) a real-time resource table (103) and ii) a resource exchange server (104) which facilitates the exchange of device resources across multiple client devices. In addition, there is an exchange client (e.g. 201, 203) installed on each device that is connected to the home gateway and wants to use the resource sharing feature.

The exchange client installed on each device will collect information on device resources and report them to the exchange server (104) at fixed intervals of time t (e.g. every minute). On receiving this information, the exchange server will update the entry corresponding to the device in the resource table (103) at the home gateway. For instance, the exchange client at 'Device 1' can send the information as "{battery: 80%, data: 10 MB}" to the exchange server, which data will then be updated into the resource table as shown in Table 1. Similarly, the client at 'Device 2' may send {battery: 5%, data: 2 GB} which will also be updated in the table.

In this way after every time = t, the resource table will be updated with each device's current resource state. Further, if a device (e.g. Device 10) is Off or outside the range of the home gateway and no data is received from its client for more than time 'p', the server will itself make an entry into the resource table that the device resources are 'Unavailable'.

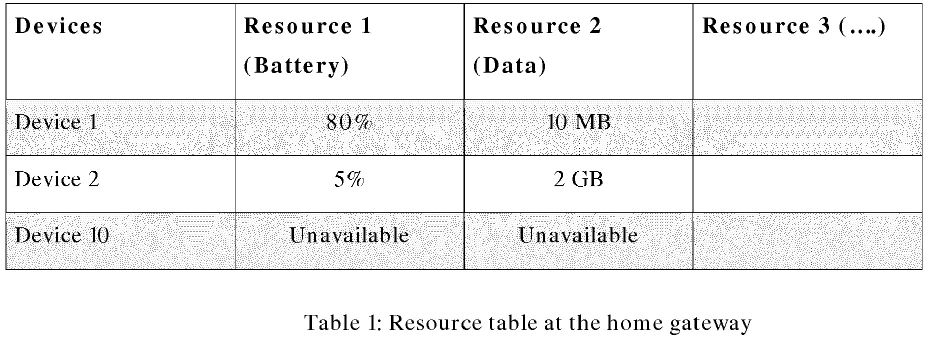

Now, when a device is running low on any resource that is needed for data communication (e.g. battery, data quota), its associated exchange client and server will perform the following steps agnostic to the user (Figure 2 illustrates this).

(Note: we are discussing the steps at an abstract level here, and will describe them along with suitable examples later).
1) ALERT: The exchange client will inform the exchange server of its resource scarcity and request a suitable device which has available resources to complete its data communication needs.
2) DISCOVER: The exchange server will access the resource table (103) and find the device which has the highest amount of available resource. E.g. if a battery resource is requested, the server will look for the device which has the highest available battery.
3) CONFIRM: The server will confirm to both the resource requester and resource supplier that a resource sharing arrangement has been made between the two. At this point, the server will also mark the supplier as "Unavailable" in the resource table for the time period during which it is serving the request.
4) OPTIMISE: The resource requester will optimise the utilisation of the scarce resource. E.g. in case of low battery, it will turn off the battery-draining 3G/4G interface and establish a low energy link such as Bluetooth Low Energy (BLE) with the resource supplier to exchange data.
5) PROCESS: The resource supplier will process the data communication needs of the requester (e.g. start downloading a file). In this regard details of the data communication will have been transmitted to the resource supplier from the resource requester via the optimized link.
6) DATA EXCHANGE: When the resource supplier finishes the data communication (i.e. the file download is over), it will pass on the data to the requester over the optimised link (e.g. the BLE connection). Once the data exchange is finished, both client apps will send a message to the server that the resource transaction is done, and they are available for any future transactions. From now on, they will keep updating their resource states after every time = t as they were doing earlier.

The result of this six-step algorithm is that the requester device, despite its scarce resources will be able to meet its data communication needs.

Embodiments seek to create a resource-exchange centre at a local network node such as a home gateway, which allows for resource-sharing transactions between multiple trusted devices.

### Embodiment 1: Sharing of battery resources across multiple devices

Assuming a Resource table as given below, one can see that one device (Device 2) has a very low battery resource (5%), while a nearby device (Device 1) has 80% battery remaining. Clearly, if Device 1 has to download a data file over an existing 3G/4G link, it will further drain its battery.

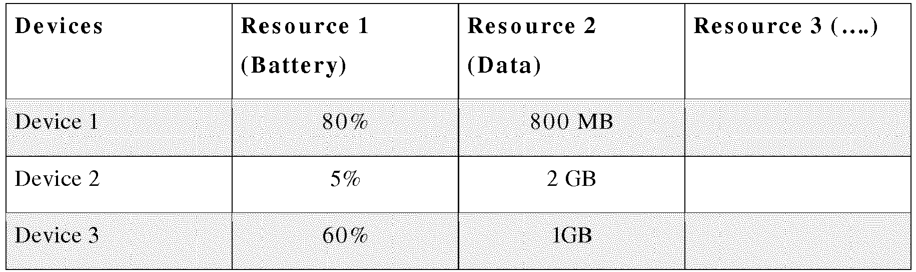

1) ALERT: First, the exchange client app installed at Device 2 passes a message to the Exchange server that it is in need of a battery resource for completing a data communication task (i.e. file download).
2) DISCOVER: The exchange server reads the resource table to find a device which can perform the data communication task. To find this candidate device, the server can apply a filtering criterion to the resource table such as {minimum_battery: 50%, minimum_data: 500MB} and find all devices which pass this criterion. In the above case, the filtering will return Device 1 and Device 3. The server then chooses the device with the maximum available resource-in-need (i.e. battery). So it will choose Device 1 as the Resource supplier and mark it as "Unavailable" for future requests.
3) CONFIRM: The server sends a message to Device 1 and Device 2 confirming the resource sharing transaction. Server -> Device 2: {Status: Confirmed, Supplier: Device 1} Server -> Device 1: {Status: Confirmed, Requester: Device 2}
4) OPTIMISE: At this point, the exchange client app (A2) in the Device 2 will minimise the utilisation of battery, by turning off the high-energy 3G/4G link with the home gateway and instead establishing a low energy connection using BLE or Wi-Fi Direct with Device 1. The app A2 will then send the URL of the data to be downloaded, to the client app A1 on Device 1. If at this point the low energy connection cannot be successfully established then a signal is transmitted to the exchange server indicating that the sharing of resources between these two devices has not been successful and the gateway will then mark device 3 as the supplier and perform steps 3 to 6 for device 3 rather than device 1.
5) PROCESS: The client app A1 will start the download of the URL on Device 1, using the battery resources of Device 1.
6) DATA EXCHANGE: Finally, the download file/ data will be transferred to the Device 2 over the same low energy link that was establishes in Step 4. Once the data exchange is finished, both client apps will send a message to the server that the resource transaction is completed, and they are available for any future transactions.

### Embodiment 2: Sharing of mobile data across multiple devices

Assuming a resource table as shown below at a given time, one device (Device 1) has a very low data quota left (10MB), while a nearby device (Device 2) has 2GB data remaining. If Device1 has to download a file of 100MB, it clearly doesn't have enough quota to complete the download.

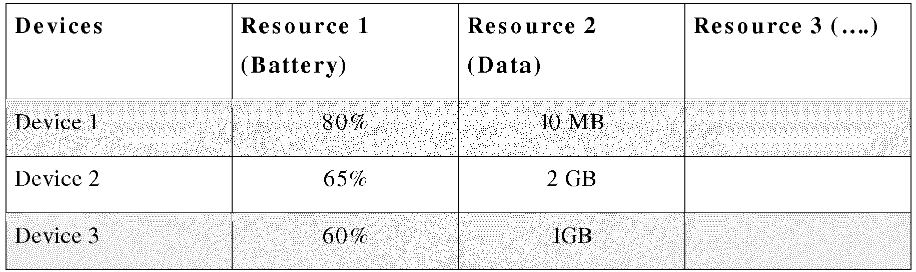

1) ALERT: First, the exchange client app installed at Device 1 passes a message to the Exchange server that it is in need of a data quota for completing a data download task of 100MB.
2) DISCOVER: The exchange server reads the resource table to find a device which can perform this data download task. To find this candidate device, the server can apply a filtering criterion to the resource table such as {minimum_battery: 50%, minimum_data: 500MB} and find all devices which pass this criterion. In the above case, the filtering will return Device 2 and Device 3. The server then chooses the device with the maximum available resource-in-need (i.e. data quota). Therefore, it will choose Device 2 as the Resource supplier and mark it as "Unavailable" for future requests.
3) CONFIRM: The server sends a message to Device 1 and Device 2 confirming the resource sharing transaction. Server -> Device 2: {Status: Confirmed, Requester: Device 1} Server -> Device 1: {Status: Confirmed, Supplier: Device 2}
4) OPTIMISE: At this point, the exchange client app (A1) in the Device 1 will minimise the utilisation of data, by turning off the data link (i.e 3G or 4G) and instead establish a local connection over Bluetooth or Wi-Fi Direct with Device 2. The app A1 will then send the URL of the data to be downloaded, to the client app A2 on Device 2.
5) PROCESS: The client app A2 will start the download of the URL on Device 2, using the data quota available on Device 2.
6) DATA EXCHANGE: Finally, the download file/ data will be transferred to the Device 1 over the local wireless connection that was established in Step 4. Once the data exchange is finished, both client apps will send a message to the server that the resource transaction has completed, and that they are available for future transactions.

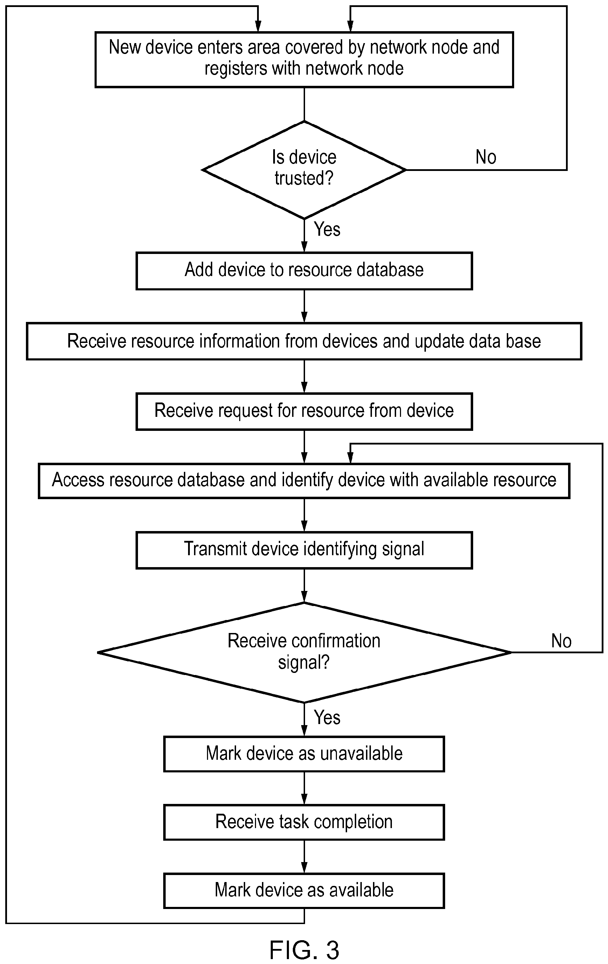

Figure 3 shows a flow diagram illustrating steps performed in a method at a network node according to an embodiment. Initially a device enters an area covered by the network node and registers with the network node. The network node determines whether the device is trusted or not. It may do this in a number of ways such as determining whether the device is identified as a trusted device in a database of such devices stored within the network node, or determining whether the device can register with the network node, that is it knows the password and/or determining whether it responds to confirmation requests that it wishes to be part of the resource sharing set of devices.

If it is determined that the device is a trusted device, then the device is added to a resource database that is stored at the network node. The resource database stores a list of trusted devices currently available within the radio coverage of the network node along with their current resource capacity. This database is updated periodically by the receipt of resource information transmitted from the devices.

A request for a resource is received at the network node from one of the devices. The network node accesses the resource database and identifies device(s) that have sufficient available resource to satisfy the request. Having identified and selected a device, it will transmit a device identifying signal. It will then wait to see if a confirmation signal is received. If a confirmation signal is received, then this indicates that the two devices have agreed to share resource and the device that has been identified as supplying the resource will be marked as unavailable in the resource database until a task completion signal is received at the network node whereupon the device can be marked as available again.

Where no confirmation signal is received, then a reject signal may be received (not shown) indicating that the two devices have not agreed to share resources and the database will be accessed again and a new device will be identified with available resources and the steps of transmitting a device identifying signal and awaiting a confirmation signal will be performed again for the newly identified device.

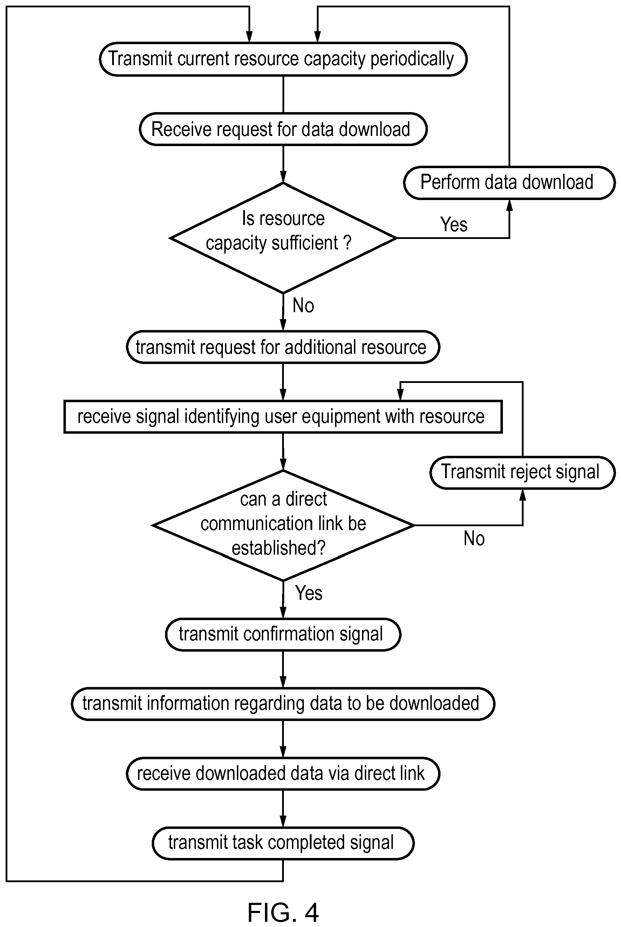

Figure 4 shows steps performed at a user equipment within the set of devices that are sharing resources. It therefore periodically transmits its current resource capacity to the network node. When it receives a request for data download it determines whether it has sufficient capacity; if it does, it will perform the steps and continue with transmitting the resource capacity periodically. If it does not have sufficient capacity, then it will transmit a request for additional resource to the network node. It will then receive a signal identifying user equipment that has available resource and it will determine if a direct communication link can be established with this user equipment. If it cannot, it will transmit a reject signal and await a new signal identifying a new user equipment with resource. If it can establish a direct link, then in this embodiment it transmits a confirmation signal. It then transmits information regarding data to be downloaded across the direct link to the user equipment with the resource. Once the user equipment with the resource has performed the requested data download, the user equipment requesting it receives the downloaded data via the direct link and it then transmits a task completed signal. In this regard, the signals that are sent indicating the success or otherwise of the sharing of resources such as the task completed signal, the confirmation signal or the reject signal may be transmitted by either one or indeed both of the user equipment concerned; that is the one requesting the resource and/or the one supplying it.

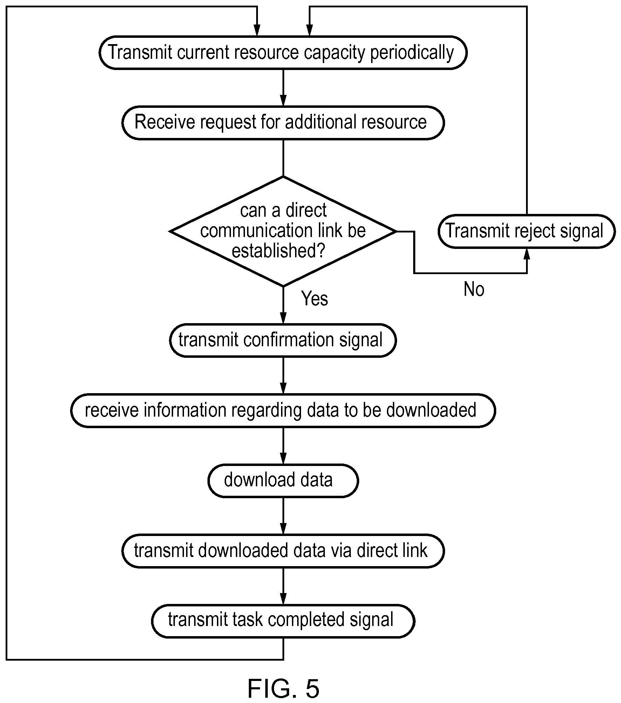

Figure 5 shows steps performed in a method for a device that is supplying the additional resource. As for the device requesting the resource, it is part of the set of devices that are sharing resources and thus transmits its current resource capacity periodically such that the network node can keep an up to date database of resources of the devices within its radio coverage. It may at some point receive a request indicating that additional resources are required from it or in some embodiments, it will simply receive a signal from another user equipment indicating that it wishes to establish a direct communication link. If a direct communication link can be established, then a confirmation signal is transmitted either by this user equipment or the user equipment requesting the resource and the user equipment receives information regarding the data to be downloaded. The user equipment will then download the data, transmit the download data via the direct link to the user equipment requesting the download and then a task completed signal will be transmitted by one of the user equipment.

If the steps to establish direct communication links are unsuccessful then a reject signal is transmitted and the process for this device providing the additional resource to the requesting device ends.

It should be noted that user equipment according to embodiments are configured to perform both the steps shown in Figure 4 and Figure 5, the steps being performed at any time depending on their current resource capacity and any tasks that they need to perform.
In summary embodiments of the invention facilitate sharing of resources between user equipment in real time without the need for manual intervention.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method performed at a network node (100), said method comprising facilitating sharing of resources between multiple user equipment (202, 204) located within a radio coverage area of said network node by:
storing within a resource database (103) a current resource capacity of each of at least a subset of said multiple user equipment; and
in response to receiving a signal from one of said multiple user equipment indicating a resource requirement to complete a data communication task requested at said user equipment:
determining from said resource database whether one of said at least a subset of multiple user equipment has sufficient resource available to complete said requested data communication task; and
if so transmitting an indicator identifying said determined user equipment with said resource available.

2. A method according to any preceding claim, wherein said step of transmitting said indicator identifying said user equipment with said resource available further indicates that a data communication task is to be transferred.

3. A method according to claim 1 or 2, comprising a further step of receiving a confirmation signal indicating that said data communication task has been accepted by said user equipment with said resource available, and in response to said signal marking said user equipment with said resource available as currently unavailable in said database.

4. A method according to claim 1 or 2, comprising a further step of receiving a signal indicating that said data communication task has not been accepted by said user equipment with said resource available, and in response to said signal determining from said resource database whether a further one of said subset of multiple user equipment has sufficient resource available to complete said requested data communication.

5. A method according to any preceding claim, comprising receiving periodic signals from said subset of multiple user equipment indicating current resource capacity and updating said resource database in response to said signals.

6. A network node (100) providing radio coverage for multiple user equipment (202, 204) located within a radio coverage area of said network node, said network node comprising:
a data store (103) configured to store a resource database comprising a current resource capacity of each of at least a subset of said multiple user equipment;
analysing circuitry (104) configured to analyse said database and configured to respond to receipt of a signal from one of said multiple user equipment indicating a resource requirement to complete a data communication task requested at said user equipment to determine from said resource database whether one of said at least a subset of multiple user equipment has sufficient resource available to complete said requested data communication task; and
communication circuitry (101) for transmitting an indicator identifying said determined user equipment with said resource available.

7. A method performed at a user equipment, comprising:
periodically transmitting signals indicating capacity of at least one local resource of said user equipment;
in response to a data communication request, determining whether said user equipment is low on a resource required to complete said data communication task and if so transmitting a signal indicating a resource requirement;
receiving a signal identifying a user equipment able to provide said resource requirement; and
performing steps to establish a direct communication link with said identified user equipment.

8. A method according to claim7, comprising receiving a request to provide resource for a data communication task for another user equipment, and performing steps to establish a direct communication link with said another user equipment.

9. A method according to claim 8, comprising in response to said steps of establishing said direct communication link being unsuccessful transmitting a signal indicating that said data communication task has not been accepted by said another user equipment with said resource.

10. A method according to claim 8, comprising receiving a request to perform a data communication task for an other user equipment and in response to said request transmitting a confirmation signal and performing said data communication task.

11. A user equipment (202, 204) comprising:
assessing circuitry (201, 203) configured to periodically assess a current capacity of at least one local resource of said user equipment;
a transmitter configured to periodically transmit said capacity;
determining circuitry configured to respond to a data communication request to determine whether said user equipment has sufficient resource to complete said data communication task and if not to control said transmitter to transmit a signal indicating a resource requirement;
a receiver configured to receive a signal identifying a user equipment able to provide said resource requirement; and
communication circuitry configured to establish a direct communication link with said identified user equipment.

12. A computer program which when executed by a computer is operable to control said computer to perform steps in a method according to any one of claims 1 to 5 and 7 to 10.

## Patentansprüche

1. Verfahren, durchgeführt an einem Netzwerkknoten (100), wobei besagtes Verfahren umfasst das Erleichtern des Teilens von Ressourcen zwischen mehreren Teilnehmergeräten (202, 204), lokalisiert innerhalb eines Funkabdeckungsbereichs von besagtem Netzwerkknoten, durch:
Speichern innerhalb einer Ressourcendatenbank (103) einer momentanen Ressourcenkapazität eines jeden mindestens eines Untersatzes besagter mehrerer Teilnehmergeräte; und
als Antwort auf das Empfangen eines Signals von einem besagter mehreren Teilnehmergerät, Anzeigen einer Ressourcenanforderung zum Fertigstellen einer Datenkommunikationsaufgabe, die angefordert wurde an besagtem Teilnehmergerät;
Bestimmen, von besagte Ressourcendatenbank, ob einem besagter mindestens einen Untersätze von mehreren Teilnehmergeräten genügend Ressourcen zur Verfügung stehen, um besagte angeforderte Datenkommunikationsaufgabe zu erfüllen; und
falls, ja, Übertragen einer Anzeige, die besagtes bestimmtes Teilnehmergerät mit besagter verfügbaren Ressource identifiziert.

2. Verfahren nach einem beliebigen der vorhergehenden Ansprüche, wobei besagter Schritt des Übertragens besagter Anzeige, die besagtes Teilnehmergerät mit besagter verfügbaren Ressource identifiziert, weiterhin anzeigt, dass eine Datenkommunikationsaufgabe übertragen werden muss.

3. Verfahren nach Anspruch 1 oder 2, umfassend einen weiteren Schritt des Empfangens eines Bestätigungssignals, das anzeigt, dass besagte Datenkommunikationsaufgabe akzeptiert worden ist von besagtem Teilnehmergerät mit besagter verfügbaren Ressource, und als Antwort auf besagtes Signal, Markieren besagten Teilnehmergeräts mit besagter verfügbaren Ressource als momentan nicht verfügbar in besagter Datenbank.

4. Verfahren nach Anspruch 1 oder 2, umfassend einen weiteren Schritt des Empfangens eines Signals, das anzeigt, dass besagte Datenkommunikationsaufgabe nicht akzeptiert worden ist von besagtem Teilnehmergerät mit besagter verfügbaren Ressource, und als Antwort auf besagtes Signal, Bestimmen aus besagter Ressourcendatenbank, ob einem weiteren besagten Untersatzes mehrerer Teilnehmergeräte genügend Ressourcen zur Verfügung stehen, um besagte angeforderte Datenkommunikation fertigzustellen.

5. Verfahren nach einem beliebigen der vorhergehenden Ansprüche, umfassend das Empfangen periodischer Signale von besagtem Untersatz mehrerer Teilnehmergeräte unter Angeben der momentanen Ressourcenkapazität und Aktualisieren besagter Ressourcendatenbank als Antwort auf besagte Signale.

6. Netzwerkknoten (100), der Funkabdeckung bereitstellt für mehrere Teilnehmergeräte (202, 204), die lokalisiert sind innerhalb eines Funkabdeckungsbereichs besagten Netzwerkknotens, wobei besagter Netzwerkknoten umfasst:
einen Datenspeicher (103), der konfiguriert ist zum Speichern einer Ressourcendatenbank, umfassend eine momentane Ressourcenkapazität eines jeden des mindestens einen Untersatzes besagter mehreren Teilnehmergeräte;
einen Analyseschaltkreis (104), der konfiguriert ist zum Analysieren besagter Datenbank und konfiguriert zum Antworten auf den Empfang eines Signals von einem besagter mehrerer Teilnehmergeräte unter Anzeigen einer Ressourcenanforderung zum Fertigstellen einer Datenkommunikationsaufgabe, die von besagtem Teilnehmergerät angefordert wurde zum Bestimmen aus besagter Ressourcendatenbank, ob eines besagten mindestens einen Untersatzes mehrerer Teilnehmergeräte hinreichende Ressourcen aufweist zum Fertigstellen besagter angeforderten Datenkommunikationsaufgabe; und
einen Kommunikationsschaltkreis (101) zum Übertragen einer Anzeige, die besagtes bestimmtes Teilnehmergerät mit besagter verfügbaren Ressource identifiziert.

7. Verfahren, durchgeführt an einem Teilnehmergerät, umfassend:
periodisches Übertragen von Signalen, die die Kapazität mindestens einer lokalen Ressource von besagtem Teilnehmergerät anzeigen;
als Antwort auf eine Datenkommunikationsanforderung, Bestimmen, ob besagtes Teilnehmergerät zu wenig der geforderten Ressource aufweist zum Fertigstellen besagter Datenkommunikationsaufgabe und, wenn dies so ist, Übertragen eines Signals, welches eine Ressourcenanforderung anzeigt;
Empfangen eines Signals, das ein Teilnehmergerät identifiziert, das in der Lage ist zum Bereitstellen besagter Ressourcenanforderung; und
Durchführen von Schritten für den Aufbau einer direkten Kommunikationsverbindung mit besagtem identifizierten Teilnehmergerät.

8. Verfahren nach Anspruch 7, umfassend das Empfangen einer Anforderung zum Bereitstellen von Ressourcen für eine Datenkommunikationsaufgabe für ein anderes Teilnehmergerät, und Durchführen von Schritten für den Aufbau einer direkten Kommunikationsverbindung mit besagtem anderen Teilnehmergerät.

9. Verfahren nach Anspruch 8, umfassend als Antwort, wenn besagte Schritte des Aufbaus besagter direkten Kommunikationsverbindung nicht erfolgreich sind, Übertragen eines Signals, welches anzeigt, dass besagte Datenkommunikationsaufgabe nicht akzeptiert worden ist von besagtem anderen Teilnehmergerät mit besagter Ressource.

10. Verfahren nach Anspruch 8, umfassend das Empfangen einer Anforderung zum Durchführen eine Datenkommunikationsaufgabe für ein anderes Teilnehmergerät und als Antwort auf besagte Anforderung, Übertragen eines Bestätigungssignals und Durchführen besagter Datenkommunikationsaufgabe.

11. Teilnehmergerät (202, 204), umfassend:
einen Bewertungsschaltkreis (201, 203), konfiguriert zum periodischen Bewerten einer momentanen Kapazität mindestens einer lokalen Ressource von besagtem Teilnehmergerät;
einen Sender, konfiguriert zum periodischen Übertragen besagter Kapazität;
einen Bestimmungsschaltkreis, konfiguriert zum Antworten auf eine Datenkommunikationsanforderung zum Bestimmen, ob besagtes Teilnehmergerät hinreichend Ressourcen aufweist zum Fertigstellen besagter Datenkommunikationsaufgabe und, falls nicht, zum Steuern besagten Senders zum Senden eines Signals, welches eine Ressourcenanforderung anzeigt;
einen Empfänger, konfiguriert zum Empfangen eines Signals, das ein Teilnehmergerät identifiziert, welches in der Lage ist, besagte Ressourcenanforderung bereitzustellen; und
einen Kommunikationsschaltkreis, konfiguriert für den Aufbau einer direkten Kommunikationsverbindung mit besagtem identifizierten Teilnehmergerät.

12. Computerprogramm, das, wenn es auf einem Computer ausgeführt wird, betreibbar ist zum Steuern besagten Computers zum Durchführen von Schritten in einem Verfahren, das einem beliebigen der Ansprüche 1 bis 5 und 7 bis 10 entspricht.

## Revendications

1. Procédé mis en oeuvre au niveau d'un noeud de réseau (100), ledit procédé comprenant une facilitation du partage de ressources entre des équipements utilisateurs multiples (202, 204) situés dans une zone de couverture radio dudit noeud de réseau en réalisant les étapes suivantes :
stocker dans une base de données de ressources (103) une capacité de ressources actuelle de chaque équipement utilisateur d'au moins un sous-ensemble desdits équipements utilisateurs multiples ; et
en réponse à la réception d'un signal en provenance de l'un desdits équipements utilisateurs multiples indiquant un besoin en ressources pour réaliser une tâche de communication de données demandée au niveau dudit équipement utilisateur :
déterminer à partir de ladite base de données de ressources si un équipement utilisateur dudit ou desdits sous-ensembles d'équipements utilisateurs multiples a suffisamment de ressources disponibles pour réaliser ladite tâche de communication de données demandée ; et
si c'est le cas transmettre un indicateur identifiant ledit équipement utilisateur déterminé disposant desdites ressources disponibles.

2. Procédé selon l'une quelconque des revendications précédentes, dans lequel ladite étape de transmission dudit indicateur identifiant ledit équipement utilisateur disposant desdites ressources disponibles indique en outre qu'une tâche de communication de données doit être transférée.

3. Procédé selon la revendication 1 ou 2, comprenant une autre étape de réception d'un signal de confirmation indiquant que ladite tâche de communication de données a été acceptée par ledit équipement utilisateur disposant desdites ressources disponibles, et en réponse audit signal marquer ledit équipement utilisateur disposant desdites ressources disponibles comme actuellement indisponible dans ladite base de données.

4. Procédé selon la revendication 1 ou 2, comprenant une autre étape de réception d'un signal indiquant que ladite tâche de communication de données n'a pas été acceptée par ledit équipement utilisateur disposant desdites ressources disponibles, et en réponse audit signal déterminer à partir de ladite base de données de ressources si un autre équipement utilisateur dudit sous-ensemble d'équipements utilisateurs multiples a suffisamment de ressources disponibles pour réaliser ladite communication de données demandée.

5. Procédé selon l'une quelconque des revendications précédentes, comprenant la réception de signaux périodiques en provenance dudit sous-ensemble d'équipements utilisateurs multiples indiquant une capacité de ressources actuelle et la mise à jour de ladite base de données de ressources en réponse auxdits signaux.

6. Noeud de réseau (100) fournissant une couverture radio pour des équipements utilisateurs multiples (202, 204) situés dans une zone de couverture radio dudit noeud de réseau, ledit noeud de réseau comprenant :
un magasin de données (103) configuré pour stocker une base de données de ressources comprenant une capacité de ressources actuelle de chaque équipement utilisateur d'au moins un sous-ensemble desdits équipements utilisateurs multiples ;
un circuit d'analyse (104) configuré pour analyser ladite base de données et configuré pour répondre à la réception d'un signal en provenance d'un desdits équipements utilisateurs multiples indiquant un besoin en ressources pour réaliser une tâche de communication de données demandée au niveau dudit équipement utilisateur afin de déterminer à partir de ladite base de données de ressources si un équipement utilisateur dudit ou desdits sous-ensembles d'équipements utilisateurs multiples a suffisamment de ressources disponibles pour réaliser ladite tâche de communication de données demandée ; et
un circuit de communication (101) destiné à transmettre un indicateur identifiant ledit équipement utilisateur déterminé disposant desdites ressources disponibles.

7. Procédé mis en oeuvre au niveau d'un équipement utilisateur, comprenant les étapes suivantes :
transmettre périodiquement des signaux indiquant une capacité d'au moins une ressource locale dudit équipement utilisateur ;
en réponse à une demande de communication de données, déterminer si ledit équipement utilisateur manque des ressources requises pour réaliser ladite tâche de communication de données et si c'est le cas transmettre un signal indiquant un besoin en ressources ;
recevoir un signal identifiant un équipement utilisateur capable de satisfaire ledit besoin en ressources ; et
réaliser les étapes pour établir une liaison de communication directe avec ledit équipement utilisateur identifié.

8. Procédé selon la revendication 7, comprenant la réception d'une demande de fourniture de ressources pour une tâche de communication de données pour un autre équipement utilisateur, et la réalisation des étapes pour établir une liaison de communication directe avec ledit autre équipement utilisateur.

9. Procédé selon la revendication 8, comprenant en réponse à l'échec desdites étapes d'établissement de ladite liaison de communication directe la transmission d'un signal indiquant que ladite tâche de communication de données n'a pas été acceptée par ledit autre équipement utilisateur disposant desdites ressources.

10. Procédé selon la revendication 8, comprenant la réception d'une demande de réalisation d'une tâche de communication de données pour un autre équipement utilisateur et en réponse à ladite demande la transmission d'un signal de confirmation et la réalisation de ladite tâche de communication de données.

11. Équipement utilisateur (202, 204) comprenant :
un circuit d'évaluation (201, 203) configuré pour évaluer périodiquement une capacité actuelle d'au moins une ressource locale dudit équipement utilisateur ;
un émetteur configuré pour transmettre périodiquement ladite capacité ;
un circuit de détermination configuré pour répondre à une demande de communication de données afin de déterminer si ledit équipement utilisateur a suffisamment de ressources pour réaliser ladite tâche de communication de données et si ce n'est pas le cas pour commander audit émetteur de transmettre un signal indiquant un besoin en ressources ;
un récepteur configuré pour recevoir un signal identifiant un équipement utilisateur capable de satisfaire ledit besoin en ressources ; et
un circuit de communication configuré pour établir une liaison de communication directe avec ledit équipement utilisateur identifié.

12. Programme informatique qui lorsqu'il est exécuté par un ordinateur permet de commander audit ordinateur de mettre en oeuvre les étapes d'un procédé selon l'une quelconque des revendications 1 à 5 et 7 à 10.
